# EUROPEAN PATENT SPECIFICATION

(11) **EP 1 071 842 B1**
(45) Date of publication and mention of the grant of the patent: **13.11.2002**
(21) Application number: 99913286.3
(22) Date of filing: 22.03.1999
(51) Int. Cl.: D21C 11/00, D21B 1/04, C08H 5/00

(54) **A METHOD AND PLANT FOR THE CONTINUOUS EXTRACTION, FROM A WOODY MATERIAL, OF A TANNIC SUBSTANCE CONTAINED THEREIN AND FOR THE PRODUCTION OF A USABLE LIGNOCELLULOSIC MATERIAL**
VERFAHREN UND ANLAGE ZUR KONTINUIERLICHEN EXTRAKTION VON GERBSTOFFEN AUS EINEM HOLZMATERIAL UND ZUR HERSTELLUNG EINES NUTZBAREN HOLZCELLULOSEMATERIALS
PROCEDE ET INSTALLATION POUR L'EXTRACTION EN CONTINU D'UNE SUBSTANCE TANNIQUE CONTENUE DANS UNE MATIERE LIGNEUSE ET POUR LA PRODUCTION D'UNE MATIERE LIGNOCELLULOSIQUE UTILISABLE

(30) Priority: 26.03.1998 IT TO980261
(43) Date of publication of application: 31.01.2001
(73) Proprietor: Luykx, Theresia, 12087 Pamparato (IT); Battaglia, Riccardo, 12084 Mondovi (IT)
(72) Inventor: BATTAGLIA, Riccardo, I-12084 Mondovi' (IT); CALLERI, Giacomo, I-12087 Pamparato (IT)
(74) Representative: Saconney, Piero
(86) International application number: EP9901888
(87) International publication number: WO99049129

(56) References cited:
- EP-A- 0 481 396
- FR-A- 2 621 784
- US-A- 3 007 971
- US-A- 5 238 680
- DATABASE WPI Section Ch, Week 8309, Derwent Publications Ltd., London, GB; Class D18, AN 1983-22203K, XP002082029 & SU 924 104 A (UKRNIIKP LEATHER) 30 April 1982

## Description

The present invention relates to a method according to Claim 1 and to a plant according to Claim 13.

The invention has been developed for application to the treatment of chestnut wood in order to extract tannin therefrom and, at the same time, to produce a woody material, substantially free of tannin and usable, amongst other things, for the formation of sheet or board products.

The invention may, however, be applied to other woody materials containing a high proportion of vegetable tannin, such as the bark of oak and of some acacias, including mimosas, and such as the wood of many conifers, red quebracho wood, algarobilla, cherry plum, divi-divi, as well as valonia fruits, mangrove roots, acorns, Sicilian sumac, and tara.

With reference to the conventional method applied to chestnut wood, the raw wood is collected in heaps and is then reduced, by means of a chopper or shredder, to chips having average dimensions of 30 x 30 x 0.5 mm with a specific surface area of at least 400-600 mm² per cm³ of chip.

The chips are then treated in batches in a series of diffusers in which the tannin is extracted from the chips in aqueous solution by treatment with a counter-flow of water at high temperature (110-120°C).

The tannin extracted is then sent to a multi-stage evaporator. The concentrate is sold, after various chemical treatments, mainly for the production of leather.

The slightly polluting material evaporated from the evaporator may be used partially in the extraction process or may be discharged to the exterior.

This known method has various disadvantages.

A first disadvantage consists of the fact that the yield from the extraction of tannin in the diffusers is quite low (70-80%).

Another disadvantage consists of the fact that, because of the use of the diffusers, the method is discontinuous, whereas it would be desirable to have a continuous, and hence more economical, process.

Yet another disadvantage consists of the fact that the chips discharged from the diffusers still contain a quantity of tannin such that their use as constituents, for example, of compressed boards, is undesirable, given the strong colouring capacity of tannin.

Document US-A-5 238 680 discloses a method and a multi-stage apparatus for extracting tannins from bark and other tannin containing wood products.

This known method starts from a finely milled raw material (bark or other wood product) in a dry form. The raw material is contacted with a first tannin enriched aqueous wash medium at temperatures of 60°C-100°C. Then the tannin-rich liquid extract is separated by filtration, and the resulting filter cake is dewatered under pressure. The filter cake is then washed with a plurality of wash media at temperatures of 60°C-100°C.

The tannin enriched media are separated after each washing stage by filtration, and the filter cake is dewatered under pressure. Each successive wash medium has a lower degree of tannin enrichment than the preceding wash medium.

By that known method one obtains, on the one hand, a tannin rich extract and, on the other hand, a lignocellulose product which may be used as fuel or for horticultural or other applications.

Board manufacturers preferably use fibres produced from wood chips which do not contain a great amount of tannin (which may be more expensive if they are not chestnut wood).

One example of a method and plant for obtaining such substantially tannin-free fibres and boards is given by the document FR-A-2 621 784.

This document discloses a method and a plant in which a woody substance is reduced into fibres, and the fibres are suspended in a recycled aqueous liquor.

From the suspension one obtains, by separation, on the one hand, a foodstuff for cattle and other animals, and, on the other hand, a wood pulp from which fibre panels are made.

The foodstuff contains starches, sugars, and also tannins, the latter to give the foodstuff antidiarrbeal properties.

Document FR-A-2 621 784 also teaches to prepare a fifty-fifty mixture of two kinds of wood pulp; one of the pulps is made of fibres of chestnut wood from which tannin has already been extracted as far as possible beforehand; the other pulp is made of fibres of wood naturally poor in tannin, such as beech, alder, oak (not oak bark) and hornbeam.

This can be explained by the fact that the concern of FR-A-2 621 784 is to obtain, on the one hand, fibre board as white as possible, i.e. as free as possible from tannin and, on the other hand, a foodstuff having medicinal properties, due to the presence of a certain proportion of tannin, in addition to starch and sugar.

Therefore, the method and plant according to FR-A-2 621 784 are not adapted for the extraction of a tannic substance from woods which contain high percentages of tannins, such as chestnut wood and oak bark (15%), and quebracho wood (40%) , such woods containing low and uninteresting percentages of starches and sugars.

Yet another disadvantage which makes, according to the prior art, chestnut wood chips not very suitable for the production of boards or the like is that, in the diffusers, the chips undergo an excessively intense heat treatment (at about 110-120°C for several hours) as a result of which the chemico-physical characteristics of the boards which can be produced from them are mediocre, because the intense heat treatment degrades the cellulose into hemicellulose and sugars.

Further, the intense heat treatment to improve the extraction of tannin may also degrade the tannins contained in the wood, giving rise to tannic products of lower quality.

The object of the invention is to provide a substantially continuous method and plant which eliminate these problems.

According to the invention, this object is achieved by means of a method and plant as claimed.

By virtue of this concept, the woody material is no longer treated discontinuously as in conventional diffusers.

Instead of being sent into the diffusers, the chips are subjected to further fragmentation into fibres or groups of fibres having a specific surface area of at least 2000 mm² per cm³ of fibre, which is advantageously achieved in a thermo-mechanical defibrator.

During the subsequent dispersal of the particles in water, since the exchange surface between the fibres and the water is much larger than that between chips and water, much higher percentages, for example 90%, of the tannin can be dissolved in the water than in conventional methods.

However, even if a yield equal to that of conventional methods (70-80%) is considered satisfactory, a plant according to the invention is more economical than a conventional plant, amongst other things because it enables a continuous or substantially continuous method to be implemented.

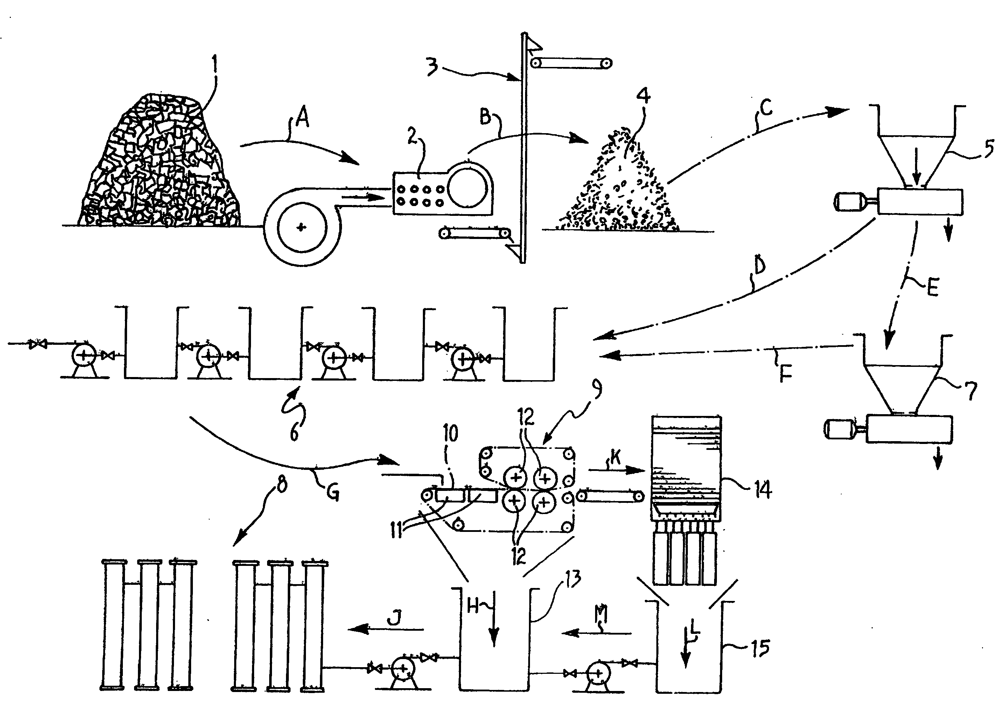

At the same time, the wood fibres are no longer subject to the ill-treatment which they undergo in the diffusers and retain optimal chemico-physical properties which render them more suitable for the manufacture of sheet or board products or the like, as will be explained in the course of the description with reference to the drawing.

The invention will be explained further by the following description relating to the appended drawing which shows schematically, by way of non-limiting example, a plant for treating chestnut wood in order to derive therefrom both tannin and compressed boards.

With reference to the drawing, the arrows A ... M indicate the movements of the materials from one treatment atop to the next.

A pile of piedes of chestnut wood is indicated 1.

A chopper or shredder of known type to which the pieces from the pile 1 are supplied substantially continuously (arrow A) for reduction to chips, is indicated 2.

The chips discharged from the shredder 2 have an average size of the order of 30 x 30 x 0.5 mm with a specific surface area of the order of at least 400 mm² per cm³ of chip.

A conveyor system 3 removes the chips from the shredder 2 and piles them in a heap of chips 4 (arrow B).

A thermo-mechanical defibrator to which the chips 4 are supplied substantially continuously in accordance with the arrow C is indicated 5.

The defibration produces fibres or groups of fibres having a specific surface area of at least 2000 and preferably of at least 4000 mm² per cm³ of fibre.

A series of dispersal containers, which may be constituted by open tanks or by pressure vessels, is generally indicated 6.

The fibres discharged from the defibrator 5 are sent substantially continuously, in accordance with the arrow D, to a first container of the series 6.

The connections for the circulation of the water in the containers 6 can be switched so as to achieve a progressive dispersal of the fibres in a counter-flow.

Alternatively, this progressive dispersal may be performed with an equidirectional flow.

If the defibration performed in the defibrator 5 does not split the fibres up sufficiently, a refiner 7 may be provided, the fibres or groups of fibres discharged from the defibrator 5 being transferred substantially continuously thereto, in accordance with the broken arrow E.

Steam, preferably supersaturated and at a pressure of the order of a few bars, is advantageously admitted to the defibrator 5 to achieve, amongst other things, a partial extraction of the tannin from the fibres.

Superheated water may be admitted to the defibrator 5 instead of steam.

The refiner 7, which is similar to the defibrator 5, increases the specific surface area of the fibres to more than 4000 mm² per cm³ of fibre and, more preferably, to a value of the order of at least 7000 mm² per cm³ of fibre.

The refined fibres are then transferred substantially continuously, in accordance with the broken arrow F, from the refiner 7 to the series of containers 6.

The temperature in the defibrator 5 is preferably of the order of 140°C, which is the highest possible temperature at which tannins do not undergo degradation and at which substances different from tannin are not substantially formed and therefore are not substantially extracted by thermal degradation of the wood.

In this manner it is possible to obtain an aqueous solution in which the proportion by weight between tannic and non-tannic substances is of not less than 3.5.

The solution of tannin resulting from the extraction with steam in the defibrator 5 and/or in the refiner 7 is transferred to the series of containers 6 together with the fibres.

Both in the case of fibres coming directly from the defibrator 5 and in the case of fibres coming from the refiner 7, the fibres are dispersed in water in the series of containers 6, thus producing an aqueous solution of tannin extracted from the fibres.

A satisfactory extraction may be effected by a treatment in the containers 6 of a duration of 2 hours at a temperature of 70-80°C, which is not harmful to both the woody material and the tannic substances it contains.

A machine such as a Fourdrinier machine or the like is indicated 9.

The machine 9 comprises, amongst other things, a conveyor filter screen 10. The screen 10 is in the form of a continuous belt and circulates continuously clockwise, with reference to the drawing.

The aqueous solution with the fibres or particles in suspension is transferred from the battery 6 to the screen 10 in accordance with the arrow G and is distributed uniformly on the screen 10.

The aqueous solution transferred to the screen 10 preferably contains fibres, with a density of fibres of the order of 1-2% by weight.

The screen 10 acts as a filter and retains the fibres.

The aqueous solution, instead, descends through the screen 10 partly by dripping and partly owing to suction by means of suction boxes 11 of the type well known in paper-making machines.

The web of fibres being formed or felted is also squeezed between pairs of rollers 12 which increase the amount of the aqueous solution removed from the fibres.

All of the aqueous solution removed by dripping and/or by suction and/or by squeezing falls, in accordance with the arrow H, into an underlying collection container 13 from which the fibre-free solution is pumped, in accordance with arrow J, into the series of evaporators 8.

In the series of evaporators 8, the aqueous tannin solution is concentrated to the density prescribed for commercial uses.

Concentration to produce a dry product in powder form, which is more convenient for long-distance transportation to places of use (for example for tanning), is not excluded.

The method and plant according to the invention allow to obtain tannic products in the form of aqueous solution or in dry form which are totally useful, and do not give rise to unvaluable by-products whose disposal is difficult and expensive.

A board-forming press is indicated 14.

The web of fibres discharged from the machine 9 is transferred, in accordance with the arrow K, to the press 14 where the web is transformed into fibre boards.

The press 16 is preferably of the wet type and, in this case, has a collection container 15 into which the residual aqueous solution drips in accordance with the arrow L in order to be sent to the evaporator 8 in accordance with the arrow M.

The use of a dry press is not, however, excluded, if the dry press is preceded by a fibre-drier.

For general information about the presses usable instead of the press 14 illustrated, and about the boards which can be manufactured, reference should be made to the "DIZIONARIO D'INGEGNERIA" (DICTIONARY OF ENGINEERING), UTET, Turin, 1976, Vol. VIII, pages 192 and 193.

The Pourdrinier machine 9 or the like could also be a paper-making machine and could produce a web of paper or cardboard, that is, a sheet material rather than a board material such as the aforementioned boards.

Instead of the screen 10, the filtration means could be constituted by a normal separator filter.

Another great advantage of a plant according to the invention in which one obtains, on the one hand, tannin and, on the other hand, fibreboard or the like, is the following.

Given that the heat treatment of wood is reduced with respect to the prior art, the thermal destruction of the wood is reduced with a spare of wood of about 10%.

Further, the method and plant according to the invention do not produce the so-called black liquor or sugar liquor which is usually produced in the fibreboard plants.

A method according to the invention lends itself to the use of an existing plant in which diffusers, defibrators and/or refiners are already provided for other reasons.

In this case it may be convenient to carry out a partial extraction of tannin from the chips in the diffusers and then submit the chips to the second fragmentation in a defibrator, possibly followed by a refiner, at a temperature in the range of 120-140°C.

This second fragmentation allows to obtain on the one hand a solution having the above-said proportion by weight of not less than 3.5 between tannic and non-tannic substances and, on the other hand, fibres suitable for the other uses mentioned above.

If the existing plant only includes diffusers, the only expense to be made is the purchase of a defibrator for reducing the chips to fibres.

## Claims

1. A method for the extraction of a tannic substance from a woody material containing a high proportion of vegetable tannin, and for the production of a usable lignocellulose product, in which the woody material is subjected to the following successive steps:
- a first fragmentation consisting of a reduction of the raw woody material to chips having an average size of the order of 30x30x0.5 mm with a specific surface area of the order of at least 400 mm² per cm² of chip,
- a second fragmentation consisting of a thermo-mechanical defibration of the chips in the presence of steam or superheated water at a temperature in the range of 120°C-140°C to reduce the chips to fibres or groups of fibres having a specific surface area of at least 2000 mm² per cm³ of fibre, and to perform a partial extraction of the tannic substance simultaneously with the defibration,
- dispersal of the particles in water, thus producing an aqueous solution of the tannic substance as well as lignocellulose fibres or groups of fibres in suspension in the aqueous solution, the proportion by weight between tannic and non-tannic substances in the solution being of not less than 3.5,
- separation of the fibres or groups of fibres fom the solution by filtration.

2. A method according to Claim 1, **characterized in that** the fibres coming from the thermo-mechanical defibration are subjected to a refining step to increase their specific surface area to more than 4000 mm² per cm³ of fibre.

3. A method according to Claim 2, **characterized in that** the refining step increases the specific surface area of the fibres to a value of at least 7000 mm² per cm³ of fibre.

4. A method according to Claim 2 or Claim 3, **characterized, in that** a further partial extraction of the tannic substance is performed simultaneously with the refining.

5. A method according to any one of Claims 1 to 4, **characterized in that** the dispersal is effected with water in a series of containers.

6. A method according to Claim 5, **characterized in that** tanks are used as containers.

7. A method according to Claim 5, **characterized in that** pressure vessels are used as containers.

8. A method according to any one of Claims 5 to 7, **characterized in that** the dispersal is effected in a counter-flow.

9. A method according to any one of Claims 5 to 7, **characterized in that** the dispersal is effected with an equidirectional flow.

10. A method according to any one of the preceding claims, **characterized in that** the aqueous solution separated from the fibres or groups of fibres is subsequently concentrated until at least some of the water has been removed therefrom.

11. A method according to any of Claims 1 to 10, **characterised in that** between the first fragmentation and the second fragmentation a partial extraction of tannin is carried out in a battery of diffusers.

12. A method according to any one of the preceding Claims, **characterized in that** the aqueous solution containing the fibres is spread on a conveyor filter screen of a Fourdrinier machine, from which the residual aqueous solution is removed by dripping and/or suction and/or squeezing, whilst the paste of fibres carried by the screen is sent to a section for the formation of a sheet or board material.

13. Plant for the extraction of a tannic substance from a tannic woody material containing a high proportion of vegetable tannin, and for the production of a usable lignocellulose product, by means of the method of Claim 1, the plant comprising at least, in succession:
- a shredder (2) for reducing the raw woody material to chips,
- a thermo-mechanical defibrator (5) for reducing the chips to fibres or groups of fibres having a specific surface area of at least 2000 mm² per cm³ of fibre in the presence of steam or superheated water, and for performing a partial extraction of the tannic substance simultaneously with the defibration,
- a series (6) of containers for dispersing the fibres or groups of fibres in water to produce an acqueous solution of the tannic substance as well as lignocellulose fibres or groups of fibres in suspension in the aqueous solution,
- filtration means (10) for separating the fibres or groups of fibres from the solution, and
- a refiner (7) situated between the defibrator (5) and the series of dispersal containers (6) to increase the specific surface area of the fibres to more than 4000 mm² per cm³ of fibre.

14. Plant according to Claim 13, **characterized in that** the containers of the series are tanks (6).

15. Plant according to Claim 13, **characterized in that** the containers of the series are pressure vessels.

16. Plant according to any one of Claims 13 to 15, **characterized in that** the series of containers (6) is of the counter-flow type.

17. Plant according to any one of Claims 13 to 15, **characterized in that** the series of containers (6) is of the type with an equidirectional flow.

18. Plant according to any one of Claims 13 to 17, **characterized in that** it further comprises an evaporator (8) for at least partially removing the water from the salution separated from the fibres or groups of fibres.

19. Plant according to any one of Claims 13 to 18, **characterized in that** it comprises a Fourdrinier machine (9) with a conveyor filter screen (10) on which the aqueous solution containing the fibres is spread, the screen (10) constituting the filtration means and being provided with means (11) for the suction of the aqueous solution and/or means (12) for squeezing out the aqueous solution, and means (13) for collecting the aqueous solution which drips, and/or is drawn and/or squeezed through the screen (10), and for sending the paste of fibres carried by the screen to a section (14) for the formation of a sheet or board material.

20. Plant according to Claim 19, **characterized in that** it comprises an evaporator (8) to which the solution separated from the fibres is sent from the collection means (13) in order to be concentrated.

## Patentansprüche

1. Verfahren zur Extraktion von Gerbstoffen aus einem Holzmaterial mit einem hohen Anteil pflanzlicher Gerbstoffe und zur Herstellung eines nutzbaren Holzcelluloseprodukts, wobei das Holzmaterial in den nachstehenden, aufeinander folgenden Phasen bearbeitet wird:
- eine erste Zerkleinerung, bei der das Rohmaterial aus Holz zu Schnitzel zerspant wird, die eine durchschnittliche Größe in der Größenordnung von 30 x 30 x 0,5 mm mit einer spezifischen Oberfläche in der Größenordnung von wenigstens 400 mm² je cm³ Schnitzel haben,
- eine zweite Zerkleinerung, bei der die Schnitzel unter Dampf oder überhitztem Wasser im Bereich von 120°C bis 140°C thermomechanisch zerfasert werden, um die Schnitzel zu Fasern oder Fasergruppen mit einer spezifischen Oberfläche von wenigstens 2000 mm² je cm³ Faser zu reduzieren und um gleichzeitig mit der Zerfaserung eine partielle Extraktion der Gerbstoffe durchzuführen,
- Dispersion der Partikel in Wasser zur Herstellung einer wässrigen Lösung der Gerbstoffe sowie einer Suspension der Holzcellulosefasern oder Fasergruppen in der wässrigen Lösung, wobei das Gewichtsverhältnis zwischen Gerbstoffen und Nicht-Gerbstoffen in der Lösung nicht geringer als 3,5 ist,
- Trennung der Fasern oder Fasergruppen von der Lösung durch Filtration.

2. Verfahren nach Anspruch 1, **dadurch gekennzeichnet, daß** die bei der thermomechanischen Zerfaserung gebildeten Fasern in einer Raffinationsphase behandelt werden, um ihre spezifische Oberfläche auf mehr als 4000 mm² je cm³ Faser zu vergrößern.

3. Verfahren nach Anspruch 2, **dadurch gekennzeichnet, daß** bei der Raffinationsphase die spezifische Oberfläche der Fasern auf einen Wert von wenigstens 7000 mm² je cm³ Faser erhöht wird.

4. Verfahren nach Anspruch 2 oder 3, **dadurch gekennzeichnet, daß** gleichzeitig mit der Raffination eine weitere partielle Extraktion der Gerbstoffe durchgeführt wird.

5. Verfahren nach einem der Ansprüche 1 bis 4, **dadurch gekennzeichnet, daß** die Dispersion in Wasser in einer Behälterreihe durchgeführt wird.

6. Verfahren nach Anspruch 5, **dadurch gekennzeichnet, daß** als Behälter Tanks eingesetzt werden.

7. Verfahren nach Anspruch 5, **dadurch gekennzeichnet, daß** als Behälter Druckkessel eingesetzt werden.

8. Verfahren nach einem der Ansprüche 5 bis 7, **dadurch gekennzeichnet, daß** die Dispersion im Gegenstrom durchgeführt wird.

9. Verfahren nach einem der Ansprüche 5 bis 7, **dadurch gekennzeichnet, daß** die Dispersion bei Gleichstrombetrieb durchgeführt wird.

10. Verfahren nach einem der vorhergehenden Ansprüche, **dadurch gekennzeichnet, daß** die von den Fasern oder Fasergruppen abgetrennte wässrige Lösung anschließend konzentriert wird, bis wenigstens ein Teil des Wassers abgezogen worden ist.

11. Verfahren nach einem der Ansprüche 1 bis 10, **dadurch gekennzeichnet, daß** zwischen der ersten Zerkleinerung und der zweiten Zerkleinerung eine partielle Gerbstoffextraktion in einer Batterie von Diffusoren durchgeführt wird.

12. Verfahren nach einem der vorhergehenden Ansprüche, **dadurch gekennzeichnet, daß** die wässrige, die Fasern enthaltende Lösung auf einem Transport-Filtergewebe einer Fourdrinier-Maschine verteilt wird, von dem die restliche wässrige Lösung durch Abtropfen und/oder Absaugen und/oder Quetschen entfernt wird, während der auf dem Gewebe liegende Faserbrei zu einem Abschnitt für die Herstellung eines blattförmigen oder tafelförmigen Materials transportiert wird.

13. Anlage zur Extraktion von Gerbstoffen aus einem Holzmaterial mit einem hohen Anteil pflanzlicher Gerbstoffe und zur Herstellung eines nutzbaren Holzcelluloseprodukts nach dem Verfahren gemäß Anspruch 1, wobei die Anlage nacheinander aufweist:
- einen Häcksler (2) für die Zerkleinerung des Rohmaterials aus Holz zu Schnitzeln,
- einen thermomechanischen Zerfaserer (5) für die Reduzierung der Schnitzel zu Fasern oder Fasergruppen mit einer spezifischen Oberfläche von wenigstens 2000 mm² je cm³ Fasern unter Dampf oder überhitztem Wasser und zur partiellen Extraktion der Gerbstoffe gleichzeitig mit der Zerfaserung,
- eine Batterie (6) von Behältern zur Dispersion der Fasern oder Fasergruppen in Wasser für die Herstellung einer wässrigen Lösung der Gerbstoffe sowie einer Suspension der Holzcellulosefasern oder Fasergruppen in der wässrigen Lösung,
- Filtermittel (10) zum Abtrennen der Fasern oder Fasergruppen von der Lösung und
- einen Raffineur (7) zwischen dem Zerfaserer (5) und der Batterie der Dispersions-Behälter (6) zur Erhöhung der spezifischen Oberfläche der Fasern auf mehr als 4000 mm² je cm³ Fasern.

14. Anlage nach Anspruch 13, **dadurch gekennzeichnet, daß** die Behälter der Batterie Tanks (6) sind.

15. Anlage nach Anspruch 13, **dadurch gekennzeichnet, daß** die Behälter der Batterie Druckkessel sind.

16. Anlage nach einem der Ansprüche 13 bis 15, **dadurch gekennzeichnet, daß** die Batterie der Behälter (6) im Gegenstrom arbeitet.

17. Anlage nach einem der Ansprüche 13 bis 15, **dadurch gekennzeichnet, daß** die Batterie der Behälter (6) im Gleichstrom arbeitet.

18. Anlage nach einem der Ansprüche 13 bis 17, **dadurch gekennzeichnet, daß** diese ferner einen Verdampfer zur wenigstens teilweisen Abtrennung des Wassers von der Lösung aufweist, die von den Fasern oder Fasergruppen abgetrennt wurde.

19. Anlage nach einem der Ansprüche 13 bis 18, **dadurch gekennzeichnet, daß** diese eine Fourdrinier-Maschine (9) mit einem Transport-Filtergewebe (10) aufweist, auf dem die wässrige, die Fasern enthaltende Lösung ausgebreitet wird, wobei das Gewebe(10) die Filtermittel bildet und Mittel (11) zum Absaugen der wässrigen Lösung und/oder Mittel (12) zum Ausquetschen der wässrigen Lösung hat, ferner mit Mitteln (13) zum Sammeln der wässrigen Lösung, die abtropft und/oder abgesaugt und/oder durch das Gewebe (10) gedrückt wird, und zum Weiterleiten des auf dem Gewebe liegenden Faserbreis zu einem Abschnitt (14) für die Herstellung eines blattförmigen oder tafelförmigen Materials.

20. Anlage nach Anspruch 19, **dadurch gekennzeichnet, daß** diese einen Verdampfer (8) aufweist, zu welchem die von den Fasern abgetrennte Lösung von den Sammelmittel (13) weitergeleitet wird, um konzentriert zu werden.

## Revendications

1. Procédé pour l'extraction d'une substance tannique contenue dans une matière ligneuse à haute teneur en tanin végétal et pour la production d'une matière lignocellulosique utilisable, la matière ligneuse étant soumise aux étapes suivantes:
- une première fragmentation consistant en une réduction de la matière ligneuse brute en copeaux d'une taille moyenne de l'ordre de 30 x 30 x 0,5 mm, avec une aire de surface spécifique de l'ordre d'au moins 400 mm² par cm' de copeau,
- une seconde fragmentation consistant en un défibrage thermomécanique des copeaux, en présence de vapeur ou d'eau surchauffée à une température comprise entre 120° C et 140° C, pour réduire les copeaux en fibres ou groupes de fibres d'une surface spécifique d'au moins 2000 mm² par cm³ de fibre, et pour obtenir une extraction partielle de la substance tannique, en même temps que le défibrage,
- la dispersion des particules dans l'eau, afin de produire une solution aqueuse de la substance tannique et des fibres ou groupes de fibres de lignocellulose en suspension dans la solution aqueuse, la proportion en poids entre les substances tanniques et non-tanniques dans la solution n'étant pas inférieure à 3,5,
- la séparation des fibres ou groupes de fibres de la solution, par filtration.

2. Procédé selon la revendication 1, **caractérisé en ce que** les fibres qui proviennent du défibrage thermomécanique sont soumises à une étape de raffinage afin d'augmenter leur aire de surface spécifique jusqu'à atteindre plus de 4000 mm² par cm³ de fibre.

3. Procédé selon la revendication 2, **caractérisé en ce que** l'étape de raffinage fait augmenter l'aire de surface spécifique des fibres jusqu'à une valeur d'au moins 7000 mm² par cm³ de fibre.

4. Procédé selon la revendication 2 ou la revendication 3, **caractérisé en ce qu'**une extraction partielle supplémentaire de la substance tannique est réalisée en même temps que le raffinage.

5. Procédé selon l'une quelconque des revendications 1 à 4, **caractérisé en ce que** la dispersion s'effectue avec de l'eau dans une série de récipients.

6. Procédé selon la revendication 5, **caractérisé en ce que** des cuves sont utilisées comme récipients.

7. Procédé selon la revendication 5, **caractérisé en ce que** des réservoirs sous pression sont utilisés comme récipients.

8. Procédé selon l'une quelconque des revendications 5 à 7, **caractérisé en ce que** la dispersion s'effectue à contre-courant.

9. Procédé selon l'une quelconque des revendications 5 à 7, **caractérisé en ce que** la dispersion s'effectue avec un courant équidirectionnel.

10. Procédé selon l'une quelconque des revendications précédentes, **caractérisé en ce que** la solution aqueuse séparée des fibres ou groupes de fibres est ensuite concentrée jusqu'à ce qu'au moins une partie de l'eau en ait été retirée.

11. Procédé selon l'une quelconque des revendications 1 à 10, **caractérisé en ce qu'**entre la première fragmentation et la deuxième fragmentation, une extraction partielle de tanin est opérée dans un groupe de diffuseurs.

12. Procédé selon l'une quelconque des revendications précédentes, **caractérisé en ce que** la solution aqueuse contenant les fibres est étalée sur une toile filtrante transporteuse d'une machine Fourdrinier, d'où la solution aqueuse résiduelle est retirée par égouttage et/ou aspiration et/ou compression, tandis que la pâte de fibres portée par la toile est envoyée vers une section pour la formation d'un matériau en feuilles ou plaques.

13. Installation pour l'extraction d'une substance tannique contenue dans une matière ligneuse à haute teneur en tanin végétal et pour la production d'une matière lignocellulosique utilisable, au moyen du procédé selon la revendication 1, l'installation comprenant au moins, à la suite les uns des autres :
- un déchiqueteur (2) destiné à réduire la matière ligneuse brute en copeaux,
- un défibreur thermomécanique (5) destiné à réduire les copeaux en fibres ou groupes de fibres d'une surface spécifique d'au moins 2000 mm² par cm³ de fibre, en présence de vapeur ou d'eau surchauffée, et pour réaliser une extraction partielle de la substance tannique, en même temps que le défibrage,
- une série (6) de récipients destinés à disperser les fibres ou groupes de fibres dans l'eau afin de produire une solution aqueuse de la substance tannique et des fibres de lignocellulose ou des groupes de fibres en suspension dans la solution aqueuse,
- des moyens de filtration (10) destinés à séparer les fibres ou groupes de fibres de la solution, et
- un raffineur (7) situé entre le défibreur (5) et la série de récipients (6) servant à la dispersion, afin d'augmenter l'aire de surface spécifique des fibres jusqu'à atteindre plus de 4000 mm² par cm³ de fibre.

14. Installation selon la revendication 13, **caractérisée en ce que** les récipients de la série sont des cuves (6).

15. Installation selon la revendication 13, **caractérisée en ce que** les récipients de la série sont des réservoirs sous pression.

16. Installation selon l'une quelconque des revendications 13 à 15, **caractérisée en ce que** la série de récipients (6) est du type à contre-courant.

17. Installation selon l'une quelconque des revendications 13 à 15, **caractérisée en ce que** la série de récipients (6) est du type à courant équidirectionnel.

18. Installation selon l'une quelconque des revendications 13 à 17, **caractérisée en ce qu'**elle comprend, en outre, un évaporateur (8) destiné à retirer, au moins partiellement, l'eau de la solution qui a été séparée des fibres ou groupes de fibres.

19. Installation selon l'une quelconque des revendications 13 à 18, **caractérisée en ce qu'**elle comprend une machine Fourdrinier (9) équipée d'une toile filtrante transporteuse (10) sur laquelle la solution aqueuse contenant les fibres est étalée, la toile (10) constituant les moyens de filtration et étant équipée de moyens (11) d'aspiration de la solution aqueuse et/ou de moyens (12) permettant d'exprimer la solution aqueuse, et des moyens (13) pour recueillir la solution aqueuse qui s'égoutte, et/ou est soutirée et/ou exprimée à travers la toile (10), et pour envoyer la pâte de fibres portée par la toile vers une section (14) pour la formation d'un matériau en feuilles ou en plaques.

20. Installation selon la revendication 19, **caractérisée en ce qu'**elle comprend un évaporateur (8) vers lequel la solution séparée des fibres est envoyée, à partir des moyens de recueil (13) pour y être concentrée.
